# FASCICULE DE BREVET EUROPEEN

(11) **EP 1 882 278 B1**
(45) Date de publication et mention de la délivrance du brevet: **23.12.2009**
(21) Numéro de dépôt: 06755488.1
(22) Date de dépôt: 16.05.2006
(51) Int. Cl.: H01M 4/66, H01M 4/58

(54) **PROCEDE DE PREPARATION D'UNE ANODE POUR BATTERIE A ION-LITHIUM.**
VERFAHREN ZUR HERSTELLUNG EINER ANODE FÜR EINE LITHIUMIONENBATTERIE
METHOD FOR PRODUCTION OF AN ANODE FOR A LITHIUM ION BATTERY

(30) Priorité: 18.05.2005 FR 0504961
(43) Date de publication de la demande: 30.01.2008
(73) Titulaire: Centre National de la Recherche Scientifique, 75016 Paris (FR)
(72) Inventeur: GILLOT, Frédéric, F-80000 Amiens (FR); TARASCON, Jean-Marie, F-91540 Mennecy (FR); MONCONDUIT, Laure, F-34830 Jacou (FR)
(74) Mandataire: Sueur, Yvette
(86) Numéro de dépôt international: PCT/FR2006/001100
(87) Numéro de publication internationale: WO 2006/123050

(56) Documents cités:
- WO-A-03/058732
- US-A- 4 508 608
- PATENT ABSTRACTS OF JAPAN vol. 2000, no. 21, 3 août 2001 (2001-08-03) & JP 2001 110425 A (TOYO KOHAN CO LTD), 20 avril 2001 (2001-04-20)
- GILLOT F. ; BOYANOV, S. ; DUPOND L., DOUBLET M. - L., MORCRETTE M. ; MONCONDUIT L. ; TARASCON J. -M.: "Electrochemical reactivity and design of NiP2 negative electrodes for secondary Li-ion batteries" CHEMISTRY OF MATERIALS, AMERICAN CHEMICAL SOCIETY, WASHINGTON, DC, US, vol. 17, no. 1, 11 août 2005 (2005-08-11), pages 6327-6337, XP002360192 ISSN: 1520-5002

## Description

L'invention concerne un procédé de préparation d'une anode pour batterie à ion-lithium, ainsi qu'une anode pour ladite batterie, et une batterie à ion-lithium comprenant une telle anode.

Les batteries à ion-lithium fonctionnent par insertion réversible d'ions lithium entre une électrode négative (ou anode), et une électrode positive (ou cathode). A l'anode, la technologie à ion-lithium nécessite l'emploi d'un matériau actif pouvant se réduire à des potentiels très faibles vis-à-vis du lithium. Il est connu que le carbone répond à ce critère.

Toutefois, de tels systèmes présentent des capacités massique et volumique limitées. Il s'est donc avéré nécessaire de trouver des alternatives à l'utilisation du carbone.

A cet effet, il a été proposé d'utiliser les phosphures de métaux de transition en tant que matériau actif pour anode. Les propriétés intrinsèques de ces matériaux les rendent particulièrement intéressants pour l'insertion massive du lithium. En effet, le degré d'oxydation du phosphore peut varier de +5 sous sa forme la plus oxydée jusqu'à -3 sous sa forme la plus réduite. Le phosphore forme des liaisons phosphore-phosphore et des liaisons métal-phosphore à caractère covalent avec la plupart des métaux de transition, ces liaisons étant facilement déformables selon l'apport ou le retrait d'électrons via l'insertion / extraction de lithium.

Par exemple, WO 03/058732 décrit l'utilisation de phosphures binaires de métaux de transition tels que FeP₂, CoP₃ et MnP₄ comme matériaux actifs pour anode. Selon le procédé de fabrication de l'anode décrit dans ce document, le matériau actif est tout d'abord préparé par la voie céramique. Ce matériau actif est associé à un liant et à des particules de carbone pour former une pâte. Cette pâte est ensuite appliquée sur le collecteur de courant constitué d'une feuille métallique non poreuse. Toutefois, l'anode obtenue par un tel procédé présente une tenue en cyclage limitée et une faible cinétique, ce qui rend son utilisation peu réaliste dans une batterie à ion-lithium. En outre, ce matériau peut rapidement perdre sa capacité en cyclage en l'absence d'additifs de carbone, ou si la couche déposée sur le collecteur de courant est trop épaisse. De plus, le dépôt sur le collecteur de courant d'un matériau composite à base de phosphure et de carbone peut être rendu difficile à cause de problèmes d'adhésion. Ces inconvénients poseraient des problèmes supplémentaires dans l'hypothèse d'un procédé mis en oeuvre à l'échelle industrielle.

On connaît également des électrodes utilisées dans les batteries aqueuses de type Ni-Cd ou Ni-MeH, lesdites électrodes étant formées de mousse de nickel. Dans ces électrodes, les mousses sont simplement imprégnées de matière active Ni(OH)₂, et, en conséquence, l'interface Ni/ Ni(OH)₂ entre la mousse et le matériau actif est purement physique. La qualité d'une telle interface n'est pas suffisante pour une anode de batterie à ion-lithium.

Pour pallier ces inconvénients, l'invention propose un procédé de préparation d'une anode pour batterie à ion-lithium qui consiste à préparer le matériau actif directement sur le collecteur de courant, de sorte à obtenir une interface chimique entre le collecteur de courant et le matériau actif.

Ainsi, selon un premier aspect, l'invention propose un procédé de préparation d'une anode pour batterie à ion-lithium, ladite anode étant constituée par un collecteur de courant formé d'un métal de transition M sous forme de mousse et par un matériau actif constitué par un phosphure binaire dudit métal M, ledit matériau actif répondant à la formule MPₓ dans laquelle 1 ≤ x ≤ 4. Le procédé consiste à soumettre la mousse de métal M à l'action de vapeurs de phosphore à une température comprise entre 300°C et 600°C, le phosphore étant présent en une proportion qui diffère au plus de 10% de la proportion stoechiométrique par rapport au métal M.

La mousse peut se présenter sous forme d'un feuillet à porosité ouverte. Le fait d'utiliser une mousse présente l'avantage de permettre une réaction rapide entre le métal M et le phosphore, et de conduire à un dépôt uniforme de la couche de phosphure de métal M. Ces avantages résultent du fait que la mousse présente, grâce à sa structure poreuse, une surface de contact importante susceptible de réagir avec le phosphore. Les pores de la mousse sont ouverts et ont un diamètre d'environ 100 à 200 microns. La vapeur de phosphore peut ainsi se propager partout à l'intérieur de la mousse métallique. En outre, la structure de la mousse, lorsqu'elle est recouverte de phosphure de métal M, permet d'augmenter la surface spécifique de matériau actif disponible pour la réaction avec le lithium.

La réaction du phosphore avec la mousse de métal M permet de faire croître du phosphure du métal M sur la surface des pores de la mousse. On obtient ainsi une mousse de métal M dont les pores sont recouverts, sur toute leur surface, d'une couche de phosphure du métal M. L'épaisseur de la couche de phosphure dépend des conditions réactionnelles de température et de durée. En choisissant une durée de réaction suffisamment longue, on peut obtenir une mousse dont les pores sont totalement imprégnés de phosphure. Cette possibilité de contrôler l'épaisseur de la couche, ajoutée à la qualité de l'interface matériau actif / collecteur de courant, améliore encore les performances de l'anode obtenue.

Selon une réalisation, le phosphore est présent dans des proportions telles que le matériau actif formé réponde à la formule MP₂.

La réaction entre la mousse de métal M et le phosphore est de préférence mise en oeuvre pendant une durée comprise entre 6 et 120 heures.

Cette réaction peut avoir lieu sous gaz inerte, tel que l'argon. Elle peut également avoir lieu avantageusement sous vide, ce qui permet de s'affranchir des surpressions de vapeur de phosphore.

Le métal de transition M peut être le nickel, le cuivre, le vanadium, le titane ou le fer.

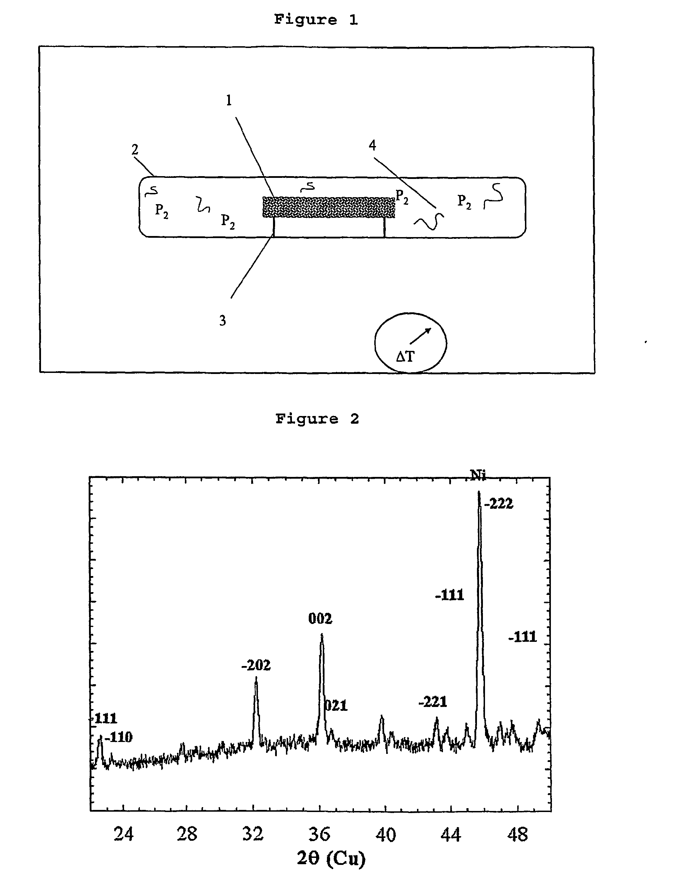

Comme représenté schématiquement sur la figure 1, une anode selon l'invention peut être préparée de la façon suivante : une mousse 1 de métal M est placée dans une ampoule 2, telle qu'un tube de silice, scellée sous un vide de 10⁻² torr, au moyen d'un support 3, par exemple en silice. La mousse 1 est soumise à l'action de vapeurs de phosphore 4. Pour cela, du phosphore rouge est introduit dans l'ampoule en proportions stoechiométriques par rapport au métal utilisé, ou dans des proportions s'écartant de plus ou moins 10% par rapport à la stoechiométrie. Puis on chauffe à une température comprise entre 300°C et 600°C, de sorte à sublimer le phosphore. La durée de la réaction, typiquement comprise entre 6 et 120 heures, conditionne la quantité de phosphure de métal qui se forme, comme cela est illustré dans l'exemple 3 ci-après.

Selon un deuxième aspect, l'invention a pour objet une anode pour batterie à ion-lithium, comprenant un collecteur de courant et un matériau actif.

Cette anode est **caractérisée en ce que** le collecteur de courant est constitué par une mousse de métal de transition M, et le matériau actif est un phosphure binaire du métal M imprégnant la mousse, qui répond à la formule MPₓ dans laquelle 1 ≤ x ≤ 4.

Selon un mode de réalisation, le matériau actif répond à la formule MP₂.

Selon une réalisation particulière, le collecteur de courant est une mousse de nickel.

Selon une autre réalisation, le collecteur de courant est une mousse de cuivre.

Le collecteur de courant peut également être une mousse de vanadium, ou une mousse de titane, ou une mousse de fer.

Selon un troisième aspect, l'invention a pour objet une batterie à ion-lithium comprenant une anode telle que définie précédemment, une cathode comprenant un matériau lithié comme matériau actif, et un électrolyte constitué d'un sel de lithium et d'un solvant ou d'un mélange de solvants.

Le matériau actif de la cathode est choisi par exemple parmi LiFePO₄, LiNiO₂, LiCoO₂, Li₂MnO₄, les oxydes de vanadium VOₓ (2 ≤ x ≤ 2,5), LiV₃O₈, Li_{y}Ni₁₋ₓCoₓO₂, (0 ≤ x ≤ 1 ; 0 ≤ y ≤ 1), les spinelles de manganèse LiyMn₁₋ₓMₓO₂ (M = Cr, Al, V, Ni, 0 ≤ x ≤ 0,5 ; 0 ≤ y ≤ 2), les polydisulfures organiques, FeS, FeS₂, le sulfate de fer Fe₂(SO₄)₃, les phosphates et phosphosilicates de fer et de lithium de structure olivine, ou leurs produits de substitution du fer par le manganèse, utilisés seuls ou en mélanges.

Le solvant de l'électrolyte est choisi de préférence parmi les liquides aprotiques tels que par exemple les éthers linéaires et les éthers cycliques, les esters, les nitriles, les dérivés nitrés, les amides, les sulfones, les sulfolanes, les alkylsulfamides et les hydrocarbures partiellement halogénés. Les solvants particulièrement préférés sont le diéthyléther, le diméthoxyéthane, le glyme, le tétrahydrofurane, le dioxane, le diméthyltétrahydrofurane, le formiate de méthyle ou d'éthyle, le carbonate de propylène ou d'éthylène (EC), les carbonates d'alkyles (notamment le carbonate de diméthyle (DMC), le carbonate de diéthyle et le carbonate de méthylpropyle), les butyrolactones, l'acétonitrile, le benzonitrile, le nitrométhane, le nitrobenzène, la diméthylformamide, la diéthylformamide, la N-méthylpyrrolidone, la diméthylsulfone, la tétraméthylène sulfone et les tétraalkylsulfonamides ayant de 5 à 10 atomes de carbone. Un mélange de deux ou plusieurs de ces liquides peut être utilisé, notamment un mélange EC/DMC.

Le sel de lithium de l'électrolyte peut être un composé ionique Li⁺Y⁻, dans lequel Y⁻ représente un anion à charge électronique délocalisée, par exemple Br⁻, ClO₄⁻, PF₆⁻, AsF₆⁻, R_{F}SO₃⁻, (R_{F}SO₂)₂N⁻, (R_{F}SO₂)₃C⁻, C₆H₍₆₋ₓ₎(CO(CF₃SO₂)2C⁻)ₓ ou C₆H₍₆₋ₓ₎(SO₂(CF₃SO₂)₂C⁻)x, R_{F} représentant un groupement perfluoroalkyle ou perfluoroaryle, avec 1≤x≤4. Les composés ioniques préférés sont les sels de lithium, et plus particulièrement (CF₃SO₂)₂N⁻Li⁺, CF₃SO₃⁻Li⁺, les composés C₆HC₍₆₋ₓ₎⁻[CO(CF₃SO₂)₂C-Li⁺]ₓ dans lesquels x est compris entre 1 et 4, de préférence avec x = 1 ou 2, les composés C₆H₍₆₋ₓ₎-[SO₂(CF₃SO₂)₂C⁻Li⁺]ₓ dans lesquels x est compris entre 1 et 4, de préférence avec x = 1 ou 2. Des mélanges de ces sels entre eux ou avec d'autres sels peuvent être utilisés. A titre d'exemple de mélanges de sels on peut citer : (CF₃SO₂)₂N⁻Li⁺ et CF₃SO₃⁻Li⁺ ou (CF₃SO₂)₂N⁻Li⁺ et C₆H₄⁻[CO(CF₃SO₂)₂C⁻Li⁺]₂ dans des proportions variées, mais comprenant de préférence de 20 à 40% en poids de (CF₃SO₂)₂N⁻Li⁺.

Le procédé de l'invention permet d'obtenir une anode présentant une tenue en cyclage nettement améliorée par rapport à celle des anodes de l'art antérieur. Ce résultat vient du fait qu'il existe une solution de continuité entre le matériau actif et le collecteur de courant, ce qui entraîne une optimisation de l'interface matériau actif / collecteur de courant et par conséquent une meilleure conductivité électronique. Il n'est donc plus nécessaire de mélanger du carbone (matériau électrochimiquement inactif) au matériau actif pour en améliorer la conductivité électronique.

En outre, la préparation de la batterie est simplifiée du fait que la synthèse du matériau actif et la préparation de l'anode sont réalisées en une seule étape.

Par ailleurs, l'anode formée ainsi que les composés de départ sont non toxiques et sont stables à l'air et à l'eau, ce qui répond de façon satisfaisante aux contraintes imposées par l'industrie.

La présente invention est illustrée par les exemples de réalisation concrets décrits ci-après, auxquels elle n'est cependant pas limitée.

Tous les échantillons ont été préparés dans un dispositif et selon le procédé décrits ci-dessus. Les mesures électrochimiques présentées ci-dessous ont été réalisées dans une cellule classique de type swadgelock. Ces mesures ont été réalisées en laboratoire, dans une cellule en configuration Li-métal, l'électrode de référence étant une électrode de lithium, l'électrode de travail étant une électrode constituée par la mousse de métal M imprégnée par le phosphure du métal M. Dans ce cas, l'élément en mousse de métal fonctionne en tant que cathode, et l'électrode de lithium de référence en tant qu'anode. Les deux électrodes sont séparées par un séparateur constitué par plusieurs couches de fibre de verre imbibées d'électrolyte. L'électrolyte est constitué par LiPF₆ dans un mélange de carbonate d'éthylène (EC) et de carbonate de diméthyle (DMC) dans un rapport massique EC/DMC de 1/1. Toutes les mesures galvanostatiques ont été réalisées en 1 Li / 10 heures, c'est-à-dire que le courant que l'on impose à la batterie correspond à l'insertion d'un ion Li⁺ dans la maille de phosphure de métal en 10 heures.

Les exemples 1 à 4 illustrent la caractérisation d'électrodes constituées de NiP₂ sur mousse de nickel, en référence aux figures 2 à 5, l'exemple 5 illustre la caractérisation d'une électrode constituée de CuP₂ sur mousse de cuivre, en référence aux figures 6 et 7, et l'exemple 6 illustre la caractérisation d'une électrode constituée de NiP₃ sur mousse de nickel, en référence aux figures 8a et 8b.

### Exemple 1

L'imprégnation de la mousse de nickel par du phosphure de nickel a été effectuée dans le dispositif décrit ci-dessus à partir d'une mousse de nickel (commercialisée par la société RECEMAT sous la référence RCM-Ni-4852.016) dont l'épaisseur est d'environ 1 mm, dont les pores ont un diamètre d'environ 100 à 200 µm et un volume d'environ 10⁻⁴ à 10⁻³ mm³. Les pores représentent environ 95% du volume total de la mousse, ce qui induit une très grande surface spécifique et une bonne rigidité et dureté de la mousse. La densité de la mousse de nickel est d'environ 0,4 à 0,5 g/cm³.

La réaction a été mise en oeuvre à une température de 600°C pendant 120 heures, en utilisant une quantité de phosphore correspondant à la stoechiométrie du composé NiP₂.

Le diffractogramme des rayons X obtenu pour le matériau constitué par la mousse imprégnée est représenté sur la figure 2. Il permet de constater que le phosphure de nickel formé sur la mousse est un diphosphure NiP₂ de structure monoclinique, présentant les paramètres suivants : a = 6,366 Å, b = 5,615 Å, c = 6,072 Å, β= 126,2, C2/c.

### Exemple 2

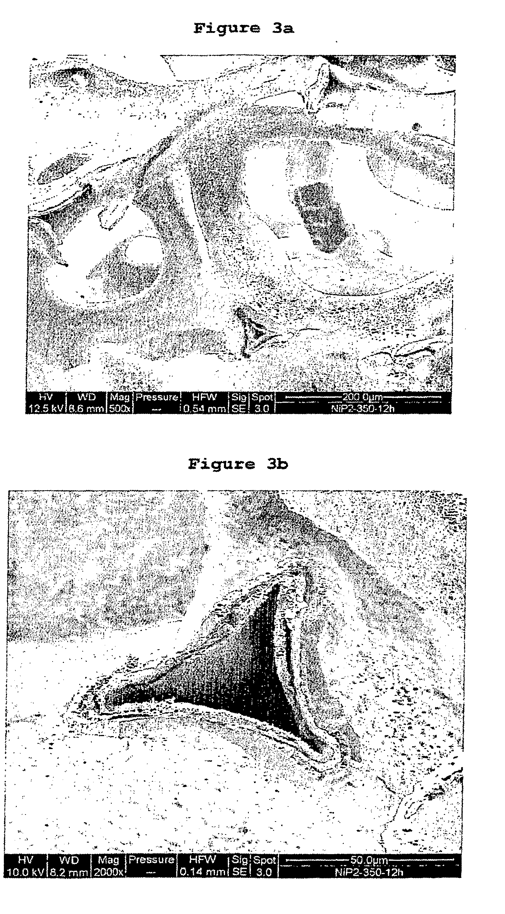

On a reproduit le mode opératoire de l'exemple 1 pour former un matériau constitué du diphosphure de nickel NiP₂ sur une mousse de nickel. La réaction a été mise en oeuvre à 350°C pendant 12 heures. Les figures 3a à 3d présentent des clichés de microscopie électronique à transmission réalisés sur le matériau obtenu, les clichés correspondant à des grossissements respectifs de x500, x2000, x6000 et x12000.

La figure 3a permet de voir la forme des pores de la mousse de nickel recouverte de NiP₂, le diamètre moyen de ces pores étant de 200 microns.

La figure 3b met en évidence l'épaisseur de la couche de NiP₂, comprise entre 5 et 10 microns.

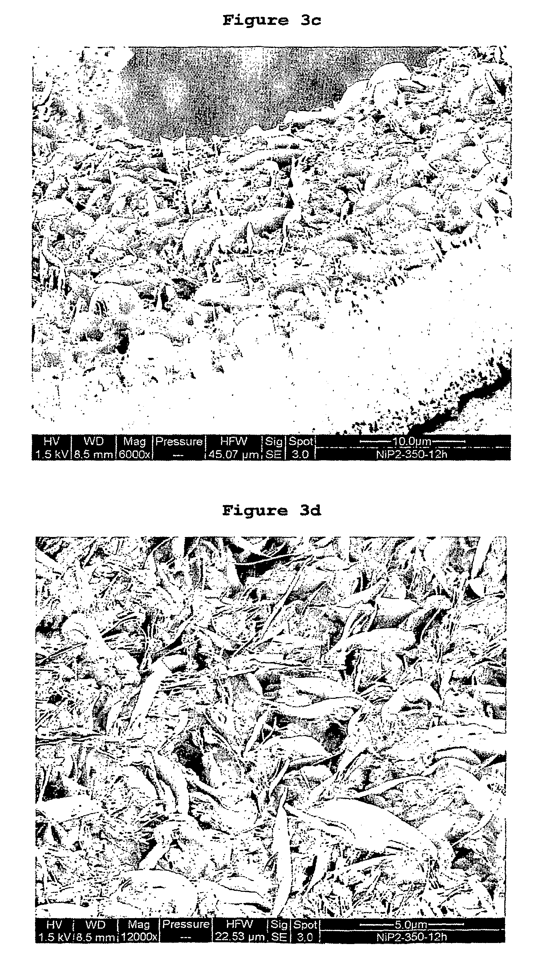

Les figures 3c et 3d font apparaître que la structure de la couche de NiP₂ est très feuilletée, ce qui contribue à augmenter la surface disponible de réaction avec le lithium. L'épaisseur des feuillets est de l'ordre de quelque dizaines de nanomètres.

### Exemple 3

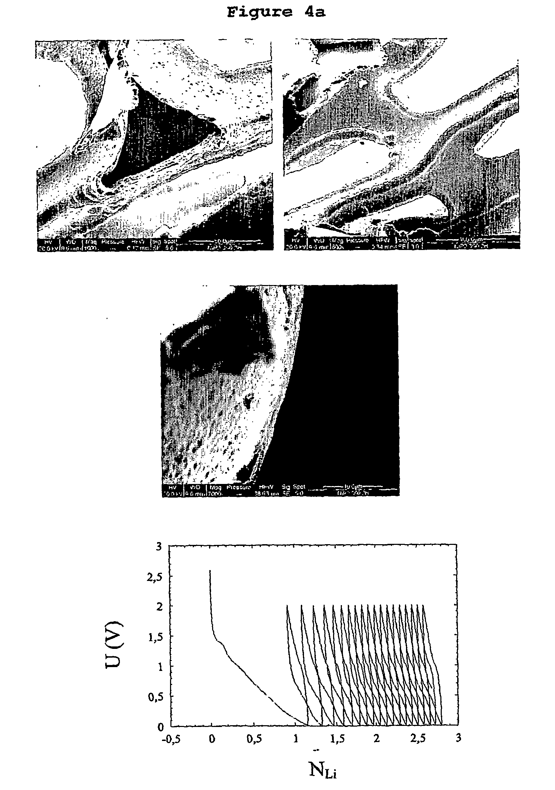

Les figures 4a à 4d représentent chacune plusieurs clichés de microscopie électronique à transmission réalisés sur un matériau constitué de NiP₂ sur mousse de nickel, obtenu selon le mode opératoire de l'exemple 2. La réaction a été mise en oeuvre à 350°C, pendant des durées respectives de 2, 6, 12 et 120 heures. Chaque figure représente également la courbe galvanostatique correspondante. Chacune de ces courbes représente le potentiel U (en Volts) en fonction du nombre d'ions Li⁺ insérés (N_{Li}).

D'après les clichés de la figure 4a, il apparaît que, au bout de 2 heures de mise en contact entre la mousse de nickel et le phosphore, la réaction de phosphuration n'a pas démarré, car la phase NiP₂ n'apparaît pas. La courbe galvanostatique correspondante montre que l'insertion de lithium est faible et irréversible, différente de celle attendue pour NiP₂.

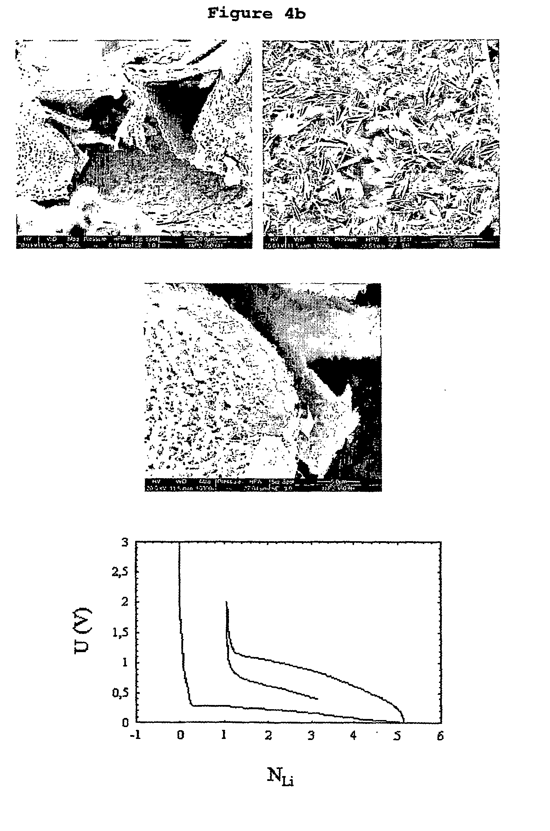

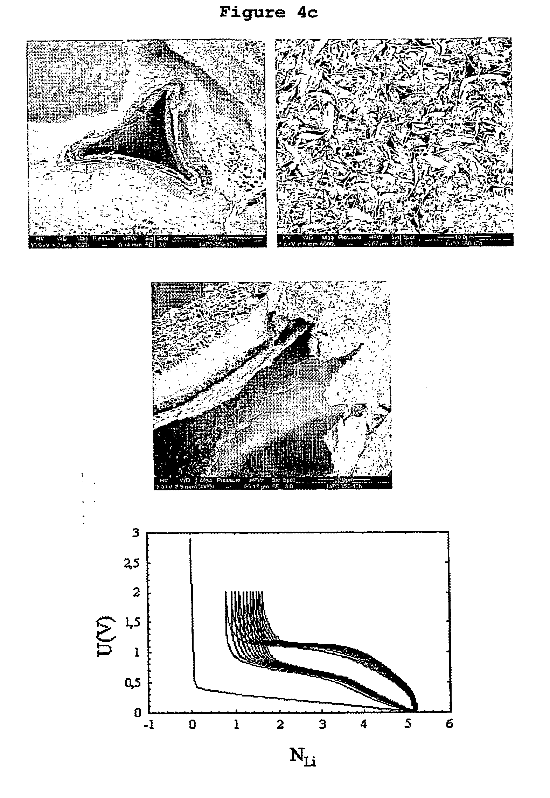

Les clichés des figures 4b et 4c montrent qu'après 6 heures de réaction, une couche de NiP₂ d'épaisseur égale à 3 microns apparaît, et que, après 12 heures de réaction, la couche atteint une épaisseur de 10 microns. Les courbes galvanostatiques correspondantes montrent une insertion réversible de 5,1 ions Li⁺ après 6 heures de réaction, et de 5,3 ions Li⁺ après 12 heures de réaction.

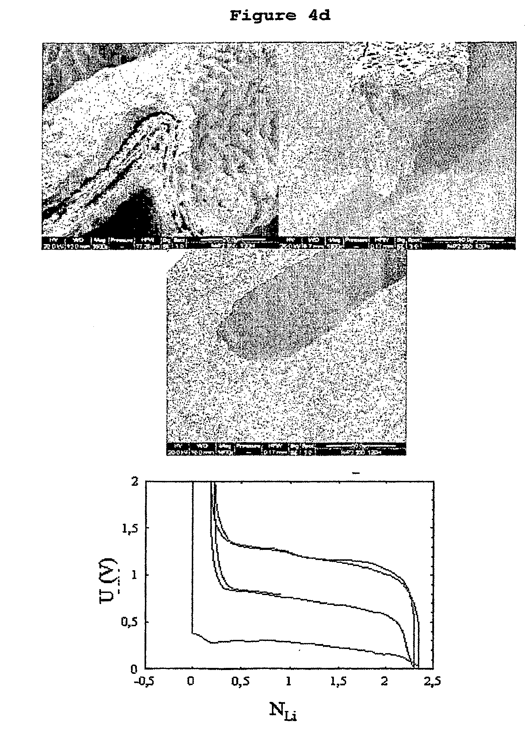

Les clichés de la figure 4d montrent qu'après 120 heures, la réaction est totale car la mousse de nickel a disparu, la quasi totalité du nickel s'étant transformée en NiP₂. La surface de NiP₂ est amorphisée (épaisseur de 20 à 50 microns), et la courbe galvanostatique montre une insertion réversible de 2 atomes de lithium.

D'après ces résultats, il apparaît que les protocoles de 6 heures et 12 heures à 350°C permettent d'obtenir les performances maximales d'insertion de lithium et de maintien de la capacité en fonction des cycles.

### Exemple 4

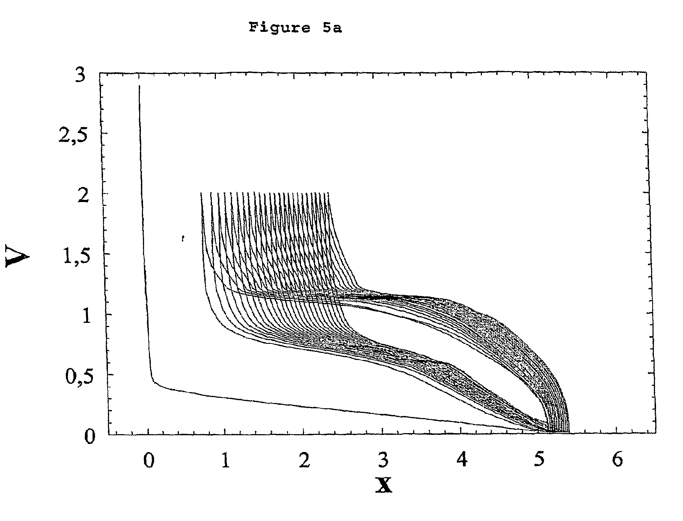

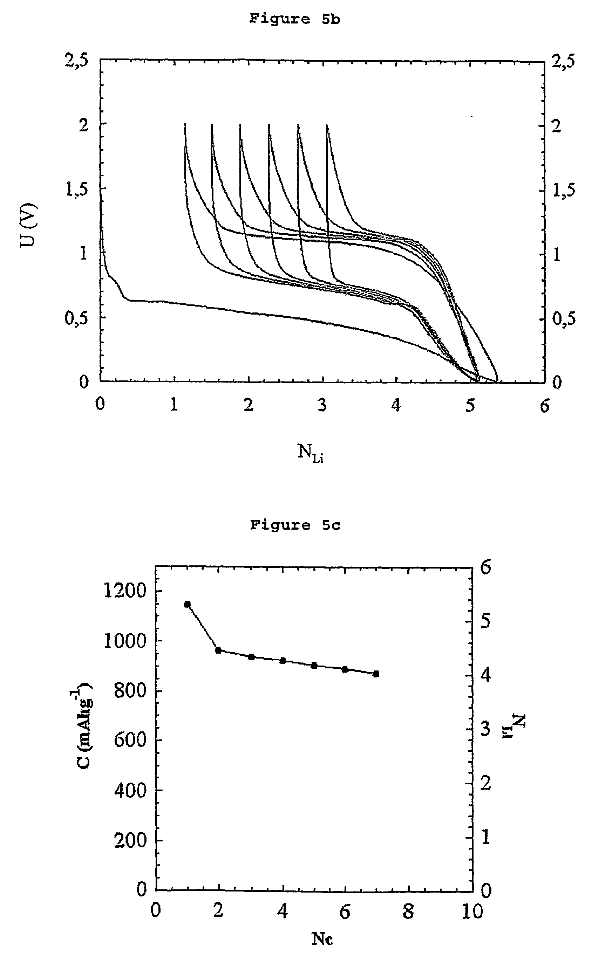

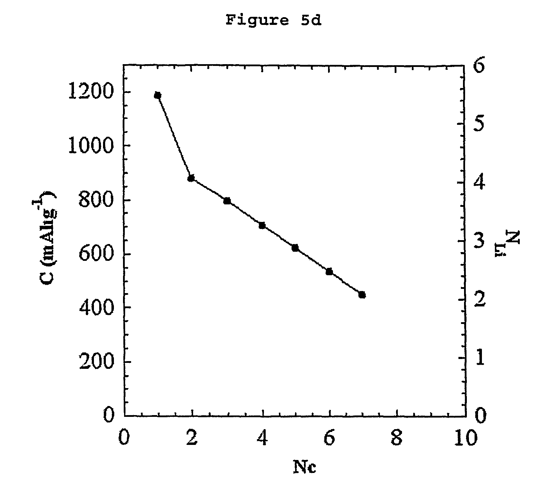

Les figures 5a à 5d permettent de comparer des performances entre une électrode selon l'invention constituée de NiP₂ sur mousse de nickel (figures 5a et 5c), et une phase NiP₂ sous forme de poudre préparée par mécanosynthèse (figures 5b et 5d). L'électrode selon l'invention a été obtenue selon le mode opératoire de l'exemple 2, la réaction entre la mousse et le phosphore ayant été mise en oeuvre à une température de 350°C pendant 12 heures. La technique de mécanosynthèse est décrite dans la publication de M. Morcrette et al., Electrochem. Solid State Lett., 6, 4 (2003).

Les courbes 5a et 5b représentent le potentiel U, en Volts, en fonction du nombre d'ions Li⁺ insérés (N_{Li}), et les courbes 5c et 5d représentent la capacité C et le nombre d'ions Li+ insérés (N_{Li})en fonction du nombre de cycles (N_{C}). Le taux d'insertion est de 1 ion Li⁺ en 10 heures.

Les courbes obtenues pour l'électrode selon l'invention montrent que 5,2 ions Li⁺ sont insérés en décharge vis-à-vis du lithium, et 4,5 ions Li⁺ sont extraits lors de la première charge. La capacité résultant de cette première décharge est de 1150 mA.h.g⁻¹, et de 1000 mA.h.g⁻¹ en charge, soit une capacité volumique de 5600 et 4900 mA.h.cm⁻³ respectivement. Après 7 cycles, la capacité est toujours de 900 mA.h.g⁻¹. Après 6 cycles, la capacité n'est plus que de 444 mA.h.g⁻¹ pour l'échantillon préparé par mécanosynthèse.

Ainsi, il apparaît que, après 7 cycles, la capacité mesurée pour la phase NiP₂ préparée par mécanosynthèse n'est plus que de 15% de celle de la première décharge, et de 20% de celle de la seconde, alors que l'électrode selon l'invention maintient 72% de la capacité de la première décharge et plus de 85% de celle de la seconde.

La tenue en cyclage est donc nettement améliorée pour l'électrode selon l'invention, par rapport au matériau préparé par mécanosynthèse. Ces résultats sont d'autant plus significatifs que les matériaux d'électrode préparés par mécanosynthèse sont eux-mêmes reconnus comme montrant des performances électrochimiques supérieures à celles des matériaux obtenus par la voie céramique classique.

### Exemple 5

L'imprégnation d'une mousse de cuivre par du phosphure de cuivre a été effectuée dans le dispositif décrit ci-dessus à partir d'une mousse de cuivre (commercialisée par la société EFOAM) dont l'épaisseur est d'environ 1,5 mm, et dont la largeur est d'environ 150 mm. Les pores représentent environ 90% du volume total de la mousse. La mousse présente une résistance de 1000 N/m.

La réaction a été mise en oeuvre à une température de 350°C pendant 15 heures, en utilisant une quantité de phosphore correspondant à la stoechiométrie du composé CuP₂.

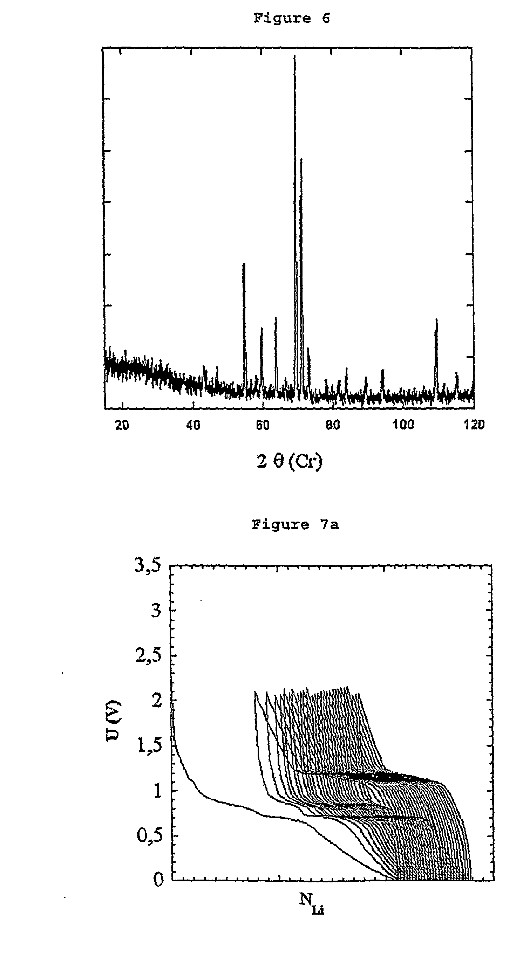

Le diffractogramme des rayons X obtenu pour le matériau constitué par la mousse imprégnée est représenté sur la figure 6 (longueur d'onde Cr). Le diagramme permet de mettre en évidence la phase cristallisée Cu₃P (a = 6,951(1) Å, c = 7,143(1) Å, dans le groupe d'espace P6₃cm), la phase CuP₂ étant amorphe aux rayons X.

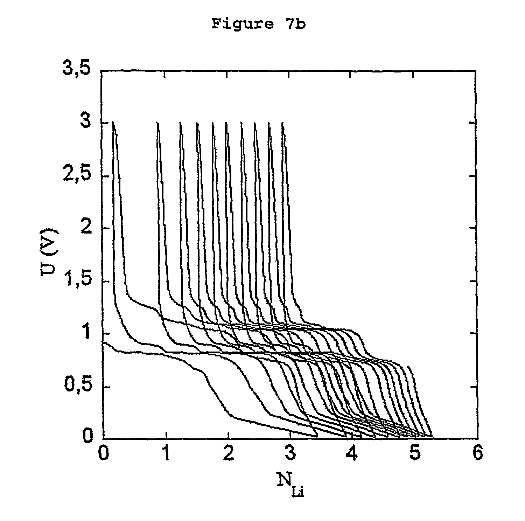

La mesure galvanostatique correspondant à cet échantillon apparaît sur la figure 7a, qui représente le potentiel U, en Volts, en fonction du nombre d'ions Li⁺ insérés (N_{Li}). Les résultats obtenus sont représentatifs de l'insertion de lithium dans une phase formée du diphosphure de cuivre CuP₂. La comparaison de ces résultats avec une mesure galvanostatique réalisée sur une poudre Cu₃P préparée par voie céramique à 600°C (Figure 7b) fait apparaître la bonne cyclabilité de la batterie préparée à partir de la mousse de cuivre.

### Exemple 6

On a reproduit le mode opératoire de l'exemple 1, mais en utilisant une quantité de phosphore correspondant à la stoechiométrie du composé triphosphure de nickel NiP₃.

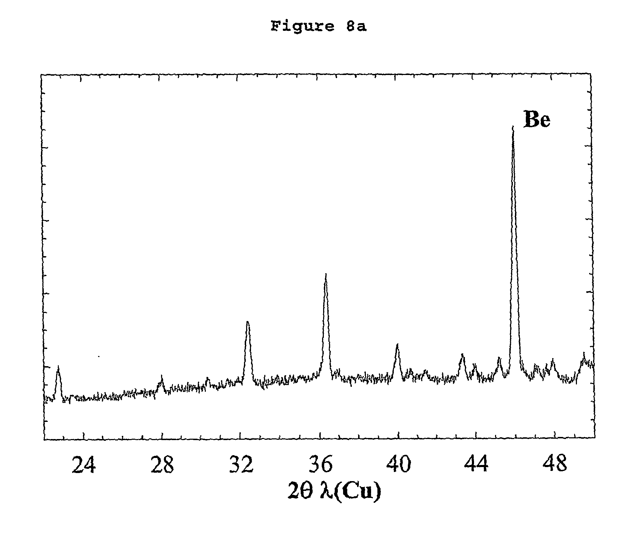

Le diffractogramme des rayons X est représenté sur la figure 8a. Il montre que le produit formé est un triphosphure NiP₃ qui a une structure cubique (Im-3) avec un paramètre de maille a = 7,819 Å.

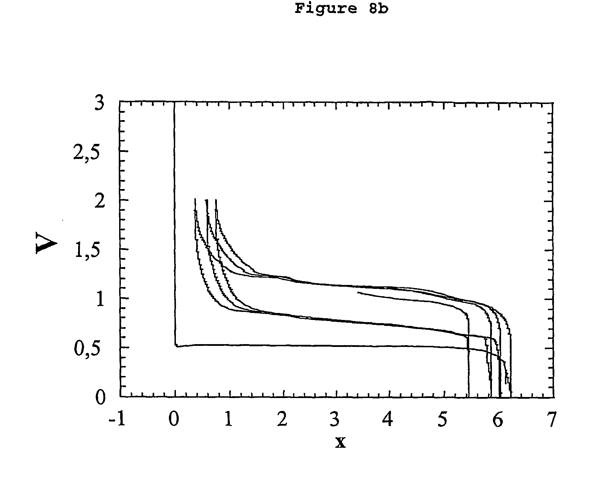

La figure 8b montre le comportement électrochimique de la mousse de Ni imprégnée par le triphosphure de nickel. Le potentiel V (Vs Li⁺/Li) est donné en ordonnée, et le nombre x d'ions Li⁺ insérés dans le composé LiₓNiP₃ est donné en abscisse. Le taux d'insertion est de 1 ion Li⁺ en 10 heures. Il apparaît que 6 ions Li⁺ sont insérés en décharge jusqu'à 0 V vis à vis du lithium, et que 5,4 ions Li⁺ sont extraits jusqu'à 2 V lors de la première charge. La capacité réversible qui en résulte est par conséquent de 960 mA.h.g⁻¹, ce qui représente le triple de la capacité d'une électrode de graphite.

## Revendications

1. Procédé de préparation d'une anode pour batterie à ion-lithium, ladite anode étant constituée par un collecteur de courant formé d'un métal de transition M sous forme de mousse et par un matériau actif constitué par un phosphure dudit métal M, ledit matériau actif répondant à la formule MPₓ dans laquelle 1 ≤ x ≤ 4, **caractérisé en ce qu'**il consiste à soumettre la mousse de métal M à l'action de vapeurs de phosphore à une température comprise entre 300°C et 600°C, le phosphore étant présent en une proportion qu diffère au plus de 10% de la proportion stoechiométrique par rapport au métal M.

2. Procédé selon la revendication 1, **caractérisé en ce que** le matériau actif répond à la formule MP₂.

3. Procédé selon la revendication 1 ou 2, **caractérisé en ce que** la réaction entre la mousse de métal et le phosphore est mise en oeuvre pendant une durée comprise entre 6 et 120 heures.

4. Procédé selon l'une quelconque des revendications 1 à 3, **caractérisé en ce que** la réaction entre la mousse de métal et le phosphore a lieu sous vide.

5. Procédé selon l'une quelconque des revendications 1 à 3, **caractérisé en ce que** la réaction entre la mousse de métal et le phosphore a lieu sous gaz inerte.

6. Procédé selon l'une quelconque des revendications précédentes, **caractérisé en ce que** le métal de transition M est le nickel.

7. Procédé selon l'une quelconque des revendications 1 à 5, **caractérisé en ce que** le métal de transition M est le cuivre.

8. Procédé selon l'une quelconque des revendications 1 à 5, **caractérisé en ce que** le métal de transition M est le vanadium.

9. Procédé selon l'une quelconque des revendications 1 à 5 **caractérisé en ce que** le métal de transition M est le titane.

10. Procédé selon l'une quelconque des revendications 1 à 5, **caractérisé en ce que** le métal de transition M est le fer.

11. Anode pour batterie à ion-lithium, comprenant un collecteur de courant et un matériau actif, **caractérisée en ce que** le collecteur de courant est constitué par une mousse de métal de transition M, et **en ce que** cette mousse est imprégnée par un phosphure binaire du métal M répondant à la formule MPₓ dans laquelle 1 ≤ x ≤ 4.

12. Anode selon la revendication 11, **caractérisée en ce que** le phosphure du métal M répond à la formule MP₂.

13. Anode selon la revendication 11 ou 12, **caractérisée en ce que** le collecteur de courant est une mousse de nickel.

14. Anode selon la revendication 11 ou 12, **caractérisée en ce que** le collecteur de courant est une mousse de cuivre.

15. Anode selon la revendication 11 ou 12, **caractérisée en ce que** le collecteur de courant est une mousse de vanadium.

16. Anode selon la revendication 11 ou 12, **caractérisée en ce que** le collecteur de courant est une mousse de titane.

17. Anode selon la revendication 11 ou 12, **caractérisée en ce que** le collecteur de courant est une mousse de fer.

18. Batterie à ion-lithium comprenant une anode selon l'une quelconque des revendications 11 à 17, une cathode comprenant un matériau lithié comme matériau actif, et un électrolyte constitué d'un sel de lithium et d'un solvant ou d'un mélange de solvants.

## Claims

1. A method for producing an anode for a lithium-ion battery, said anode consisting of a current collector formed from a transition metal M in the form of a foam and an active material consisting of a phosphide of said metal M, said active material corresponding to the formula MPₓ in which 1 ≤ x ≤ 4, **characterized in that** it consists in subjecting the metal M foam to the action of phosphorus vapors at a temperature between 300°C and 600°C, the phosphorus being present in a proportion which differs by at most 10% from the stoichiometric proportion relative to the metal M.

2. The method as claimed in claim 1, **characterized in that** the active material corresponds to the formula MP₂.

3. The method as claimed in claim 1 or 2, **characterized in that** the reaction between the metal foam and the phosphorus is carried out for a duration between 6 and 120 hours.

4. The method as claimed in any one of claims 1 to 3, **characterized in that** the reaction between the metal foam and the phosphorus takes place under vacuum.

5. The method as claimed in any one of claims 1 to 3, **characterized in that** the reaction between the metal foam and the phosphorus takes place under an inert gas.

6. The method as claimed in any one of the preceding claims, **characterized in that** the transition metal M is nickel.

7. The method as claimed in any one of claims 1 to 5, **characterized in that** the transition metal M is copper.

8. The method as claimed in any one of claims 1 to 5, **characterized in that** the transition metal M is vanadium.

9. The method as claimed in any one of claims 1 to 5, **characterized in that** the transition metal M is titanium.

10. The method as claimed in any one of claims 1 to 5, **characterized in that** the transition metal M is iron.

11. An anode for a lithium-ion battery, comprising a current collector and an active material, **characterized in that** the current collector consists of a transition metal M foam, and **in that** this foam is impregnated by a binary phosphide of the metal M corresponding to the formula MPₓ in which 1 ≤ x ≤ 4.

12. The anode as claimed in claim 11, **characterized in that** the phosphide of the metal M corresponds to the formula MP₂.

13. The anode as claimed in claim 11 or 12, **characterized in that** the current collector is a nickel foam.

14. The anode as claimed in claim 11 or 12, **characterized in that** the current collector is a copper foam.

15. The anode as claimed in claim 11 or 12, **characterized in that** the current collector is a vanadium foam.

16. The anode as claimed in claim 11 or 12, **characterized in that** the current collector is a titanium foam.

17. The anode as claimed in claim 11 or 12, **characterized in that** the current collector is an iron foam.

18. A lithium-ion battery comprising an anode as claimed in any one of claims 11 to 17, a cathode comprising a lithium-containing material as an active material, and an electrolyte consisting of a lithium salt and a solvent or a mixture of solvents.

## Patentansprüche

1. Verfahren zur Herstellung einer Anode für eine Lithiumionen-Batterie, wobei die Anode aus einem aus einem Übergangsmetall M in Schaumform gebildeten Stromabnehmer und einem aus einem Phosphid des Metalls M gebildeten aktiven Material besteht, wobei das aktive Material der Formel MPₓ entspricht, in der gilt: 1 ≤ x ≤ 4, **dadurch gekennzeichnet, dass** das Verfahren darin besteht, den Schaum des Metalls M bei einer Temperatur zwischen 300 °C und 600 °C der Einwirkung von Phosphordampf auszusetzen, wobei der Phosphor in einem Anteil vorhanden ist, die, bezogen auf das Metall, um maximal 10 % von der stöchiometrischen Menge abweicht.

2. Verfahren nach Anspruch 1, **dadurch gekennzeichnet, dass** das aktive Material der Formel MP₂ entspricht.

3. Verfahren nach Anspruch 1 oder 2, **dadurch gekennzeichnet, dass** die Reaktion zwischen dem Metallschaum und dem Phosphor über einen Zeitraum zwischen 6 und 120 h erfolgt.

4. Verfahren nach einem der Ansprüche 1 bis 3, **dadurch gekennzeichnet, dass** die Reaktion zwischen dem Metallschaum und dem Phosphor im Vakuum erfolgt.

5. Verfahren nach einem der Ansprüche 1 bis 3, **dadurch gekennzeichnet, dass** die Reaktion zwischen dem Metallschaum und dem Phosphor unter Inertgasatmosphäre erfolgt.

6. Verfahren nach einem der vorangegangenen Ansprüche, **dadurch gekennzeichnet, dass** das Übergangsmetall M Nickel ist.

7. Verfahren nach einem der Ansprüche 1 bis 5, **dadurch gekennzeichnet, dass** das Übergangsmetall M Kupfer ist.

8. Verfahren nach einem der Ansprüche 1 bis 5, **dadurch gekennzeichnet, dass** das Übergangsmetall M Vanadium ist.

9. Verfahren nach einem der Ansprüche 1 bis 5, **dadurch gekennzeichnet, dass** das Übergangsmetall M Titan ist.

10. Verfahren nach einem der Ansprüche 1 bis 5, **dadurch gekennzeichnet, dass** das Übergangsmetall M Eisen ist.

11. Anode für eine Lithiumionen-Batterie, umfassend einen Stromabnehmer und ein aktives Material, **dadurch gekennzeichnet, dass** der Stromabnehmer aus einem Schaum eines Übergangsmetalls M besteht und dass der Schaum mit einem binären Phosphid des Metalls M der Formel MPₓ imprägniert ist, in der gilt: 1 ≤ x ≤ 4.

12. Anode nach Anspruch 11, **dadurch gekennzeichnet, dass** das Phosphid des Metalls M der Formel MP₂ entspricht.

13. Anode nach Anspruch 11 oder 12, **dadurch gekennzeichnet, dass** der Stromabnehmer ein Nickelschaum ist.

14. Anode nach Anspruch 11 oder 12, **dadurch gekennzeichnet, dass** der Stromabnehmer ein Kupferschaum ist.

15. Anode nach Anspruch 11 oder 12, **dadurch gekennzeichnet, dass** der Stromabnehmer ein Vanadiumschaum ist.

16. Anode nach Anspruch 11 oder 12, **dadurch gekennzeichnet, dass** der Stromabnehmer ein Titanschaum ist.

17. Anode nach Anspruch 11 oder 12, **dadurch gekennzeichnet, dass** der Stromabnehmer ein Eisenschaum ist.

18. Lithiumionen-Batterie, umfassend eine Anode nach einem der Ansprüche 11 bis 17, eine Kathode, die ein Lithiummaterial als aktives Material umfasst, und einen Elektrolyt, der aus einem Lithiumsalz und einem Lösungsmittel oder einem Lösungsmittelgemisch besteht.
